# EUROPEAN PATENT APPLICATION

(11) **EP 4 467 493 A1**
(43) Date of publication of application: **27.11.2024**
(21) Application number: 23806737.5
(22) Date of filing: 05.05.2023
(51) Int. Cl.: B65H 23/038, B65H 23/032, B65H 23/02, B65H 16/10, H01M 10/04, H01M 6/00

(54) **DEVIATION CORRECTION METHOD AND APPARATUS FOR POLE PIECE, DEVICE, AND STORAGE MEDIUM**

(30) Priority: 20.05.2022 CN 202210551595
(71) Applicant: Contemporary Amperex Technology Co., Limited, Ningde, Fujian 352100 (CN)
(72) Inventor: WU, Qing, Ningde, Fujian 352100 (CN); HU, Jun, Ningde, Fujian 352100 (CN); FENG, Shiping, Ningde, Fujian 352100 (CN); CHANG, Wen, Ningde, Fujian 352100 (CN); ZHENG, Qiuhui, Ningde, Fujian 352100 (CN); LU, Haoran, Ningde, Fujian 352100 (CN); LEI, Yang, Ningde, Fujian 352100 (CN); DUAN, Pengfei, Ningde, Fujian 352100 (CN)
(74) Representative: Jacob, Reuben Ellis
(86) International application number: PCT/CN2023/092331
(87) International publication number: WO 2023/221785

(57) **Abstract**

A deviation correction method and apparatus (500) for a pole piece (20), a device (13), and a storage medium. The deviation correction method for the pole piece (20) comprises: determining a first offset (d1) of the pole piece (20) on a lamination machine in a first direction; according to the first offset (d1), performing deviation correction on the pole piece (20) in the first direction; determining a second offset (d2) of the pole piece (20) in a second direction, the second offset (d2) being different from the first offset (d1); and according to the second offset (d2), performing deviation correction on the pole piece (20) in the second direction.

## Description

### CROSS-REFERENCE TO RELATED APPLICATION

The present disclosure claims priority to Chinese patent application 202210551595.4, filed on May 20, 2022, and entitled "DEVIATION CORRECTION METHOD OF ELECTRODE SHEET, DEVICE, APPARATUS, AND STORAGE MEDIUM".

### TECHNICAL FIELD

The present disclosure relates to the technical field of battery, and specifically to a deviation method of an electrode sheet, a device, an apparatus, and a storage medium.

### BACKGROUND ART

In the molding process of the battery, a battery electrode sheet can be unwound by a stacking machine. During an unwinding process of the electrode sheet, the electrode sheet may deviate, and the deviation of the electrode sheet will cause an effect on the electrode sheet after compounding. Therefore, it is necessary to correct the deviation of the electrode sheet during the unwinding process of the electrode sheet.

The prior electrode-sheet deviation correction scheme corrects the deviation of the electrode sheet in an unwinding direction of the electrode sheet. This type of correction scheme does not realize an effective deflection correction of the electrode sheet, which in turn cannot ensure the performance of the electrode sheet.

### SUMMARY

The purpose of the embodiments of the present disclosure is to provide a correction deviation method of a electrode sheet, a device, an apparatus, and a storage medium to realize effective deviation correction of the electrode sheet, thereby ensuring the performance of the electrode sheet.

In a first aspect, the present disclosure provides a deviation method of a electrode sheet, including: determining a first deviation amount of a electrode sheet on a stacking machine in a first direction; correcting a deviation of the electrode sheet in the first direction according to the first deviation amount; determining a second deviation amount of the electrode sheet in a second direction, and correcting a deviation of the electrode sheet in the second direction according to the second deviation amount.

In the present disclosure, considering that the electrode sheet may deviate in multiple directions respectively, the electrode sheet is corrected in the first direction based on the first deviation amount, and the electrode sheet is corrected in the second direction based on the second deviation amount. In this way, the deviation amount of the electrode sheet in different directions can be corrected, which in turn realizes an effective deviation correction of the electrode sheet, so as to ensure the performance of the electrode sheet, such as the stability and uniformity of the electrode sheet.

As a possible embodiment, the first direction is a vertical direction of an unwinding direction of the stacking machine in an unwinding plane of the stacking machine, and the first deviation amount is a distance of the electrode sheet deviating from a first reference position in the vertical direction.

In the present disclosure, due to the friction force, installation accuracy, and other influences, the electrode sheet may deviate in the vertical direction of the unwinding direction, so that the electrode sheet is corrected based on the first deviation amount in the vertical direction, so as to realize a deviation correction of the electrode sheet in the vertical direction.

As a possible embodiment, the step of determining a first deviation amount of the electrode sheet on a stacking machine in a first direction includes: detecting the first deviation amount by a distance detection device.

In the present disclosure, an effective and accurate detection of the first deviation amount is realized by the distance detection device.

As a possible embodiment, the step of correcting a deviation of the electrode sheet in the first direction according to the first deviation amount includes: determining the first deviation direction of the electrode sheet in the first direction; and controlling the electrode sheet to move by the first deviation amount towards an opposite direction of the first deviation direction in the first direction.

In the present disclosure, a deviation direction of the electrode sheet in the first direction is determined first, and then the electrode sheet is controlled to move by the first deviation amount towards the opposite direction of the deviation direction, so that the electrode sheet does not deviate in the first direction, which realizes the deviation correction of the electrode sheet in the first direction.

As a possible embodiment, the step of controlling the electrode sheet to move by the first deviation amount towards an opposite direction of the first deviation direction in the first direction includes: generating a control instruction for a first deviation correction motor according to the first deviation direction and the first deviation amount; and sending the control instruction to the first deviation correction motor, so that the first deviation correction motor controls the electrode sheet to move by the first deviation amount towards the opposite direction of the first deviation direction in the first direction.

In the present disclosure, the deviation correction motor is configured as a deviation correction mechanism, and a control instruction of the deviation correction motor is generated, so that the deviation correction motor realizes the deviation correction according to the control instruction.

As a possible embodiment, the second direction is a rotational direction corresponding to the unwinding direction of the stacking machine in the unwinding plane of the stacking machine, and the second deviation amount is an angle of the electrode sheet deviating from a second reference position in the rotational direction.

In the present disclosure, if the electrode sheet is subjected to an uneven external force during the advancing process, it will wrinkle and rotate, which leads to the deviation of the electrode sheet in the rotational direction. Therefore, the correction deviation of the electrode sheet is realized in the rotational direction by the second deviation amount of the electrode sheet in the rotational direction. In combination with the foregoing correction deviation in the first direction, the correction deviation of the electrode sheet in each possible deviation direction can be realized.

As a possible embodiment, the step of determining a second deviation amount of the electrode sheet in a second direction includes: acquiring images of the electrode sheet at different moments by an image acquisition device; and determining the second deviation amount according to the images at the different moments.

In the present disclosure, the second deviation amount can be determined effectively and accurately based on the images at the different moments by acquiring the images of the electrode sheet at different moments.

As a possible embodiment, the step of correcting a deviation of the electrode sheet in the second direction according to the second deviation amount includes: determining the second deviation direction of the electrode sheet in the second direction; and controlling the electrode sheet to rotate by the second deviation amount towards a reverse direction of the second deviation direction in the second direction.

In the present disclosure, the deviation direction of the electrode sheet in the second direction is determined first, and then the electrode sheet is controlled to rotate by the second deviation amount towards the reverse direction of the deviation direction, so that the electrode sheet does not deviate in the second direction, which realizes the deviation correction of the electrode sheet in the second direction.

As a possible embodiment, the step of controlling the electrode sheet to rotate by the second deviation amount towards a reverse direction of the second deviation direction in the second direction includes: generating a control instruction of a second deviation correction motor according to the second deviation direction and the second deviation amount; and sending the control instruction to the second deviation correction motor, so that the electrode sheet rotates by the second deviation amount towards the reverse direction of the second deviation direction in the second direction.

In the present disclosure, the deviation correction motor is configured as the deviation correction mechanism, and the control instruction of the deviation correction motor is generated, so that the deviation correction motor realizes the deviation correction according to the control instruction.

As a possible embodiment, the step of determining the first deviation amount of the electrode sheet in the first direction includes: determining the first deviation amount of the electrode sheet in the first direction during the unwinding process of the electrode sheet.

In the present disclosure, during the unwinding process of the electrode sheet, due to the friction force, installation accuracy, and other influences, the electrode sheet may deviate left or right, at which time the first deviation amount can be detected to realize a vertical deviation correction in the first direction.

As a possible embodiment, the step of determining the second deviation amount of the electrode sheet on the stacking machine in the second direction includes: determining the second deviation amount of the electrode sheet in the second direction during an advancing process after the electrode sheet is cut off and before the electrode sheet is fed with materials.

In the present disclosure, the electrode sheet may rotate due to uneven friction and other reasons after the electrode sheet is cut off, at which time a rotational deviation correction in the second direction can be realized by the second deviation amount.

In a second aspect, the present disclosure provides a deviation correction device of the electrode sheet, including: each functional module for realizing the deviation correction method of the electrode sheet described in the first aspect and any one possible embodiment of the first aspect.

In a third aspect, the present disclosure provides a deviation correction apparatus of the electrode sheet, including: a processor, and a memory communicatively connected to the processor, wherein the memory stores instructions that can be executed by the processor, and the instructions are executed by the processor, so that the processor can execute the deviation correction method of the electrode sheet described in the first aspect and any one possible embodiment of the first aspect.

In a fourth aspect, the present disclosure provides a computer-readable storage medium, wherein the computer-readable storage medium stores computer programs thereon, and the deviation correction method of the electrode sheet described in the first aspect and any one possible embodiment of the first aspect is executed when the computer programs are run by a computer.

### BRIEF DESCRIPTION OF DRAWINGS

In order to more clearly illustrate the technical solutions of the embodiments of the present disclosure, the drawings to be used in the embodiments of the present disclosure will be briefly introduced below. It should be understood that the following drawings only show certain embodiments of the present disclosure, and therefore should not be regarded as a limitation of the scope. For persons of ordinary skill in the art, other relevant drawings can be obtained from these drawings without inventive efforts.
FIG. 1 shows a schematic structure diagram of a deviation correction system of a electrode sheet provided by the embodiments of the present disclosure;
FIG. 2 shows a schematic flow diagram of a deviation correction method of a electrode sheet provided by the embodiments of the present disclosure;
FIG. 3 shows a schematic diagram of a first direction and a first deviation amount provided by the embodiments of the present disclosure;
FIG. 4 shows a schematic diagram of a second direction and the second deviation amount provided by the embodiments of the present disclosure;
FIG. 5 shows a schematic structure diagram of a deviation correction device of a electrode sheet provided by the embodiments of the present disclosure; and
FIG. 6 shows a schematic structure diagram of a deviation correction apparatus of a electrode sheet provided by the embodiments of the present disclosure.

Reference numbers: 10- deviation correction system; 11- first deviation correction mechanism; 12- second deviation correction mechanism; 13- deviation correction apparatus of the electrode sheet; 130- processor; 131- memory; 14- distance detection device; 15- image acquisition device; 20- electrode sheet; 500- deviation correction device of the electrode sheet; 510- detection module; 520- deviation correction module.

### DETAILED DESCRIPTION OF EMBODIMENTS

The technical solutions in the embodiments of the present disclosure will be described below in conjunction with drawings in the embodiments of the present disclosure. The following embodiments are intended only to more clearly illustrate the technical solutions of the present disclosure, and therefore are intended only as examples, and are not to limit the scope of protection of the present disclosure in this way.

Unless otherwise defined, all technical and scientific terms used in the text have the same meaning as commonly understood by those skilled in the art belonging to the present disclosure. The terms used in text are used only for the purpose of describing specific embodiments, and are not intended to limit the present disclosure. The terms "include" and "comprise", and any variations thereof in the specification and claims and the foregoing description of drawings of the present disclosure, are intended to cover a non-exclusive inclusion.

In the description of the embodiments of the present disclosure, the technical terms "first", "second", etc., are only used to distinguish different objects, and are not to be understood as indicating or implying relative importance or implicitly specifying a quantity, particular order, or primary and secondary relationship of the technical features indicated. In the description of embodiments of the present disclosure, "plurality" means more than two, unless otherwise expressly and specifically limited.

Reference to "embodiment" in the text means that particular features, structures, or characteristics described in conjunction with the embodiments can be included in at least one embodiment of the present disclosure. The phrase occurring at various positions in the specification does not necessarily all refer to the same embodiment, nor is it a separate or alternative embodiment that is mutually exclusive with other embodiments. It is explicitly and implicitly understood by those skilled in the art that the embodiments described in the text can be combined with other embodiments.

The term "and/or" in description of the embodiments of the present disclosure is merely an associated relationship for describing associated objects, which indicates three relationships can exist, e.g., A and/or B can indicate three cases: A alone, both A and B, and B alone. Additionally, the character "/" in the text generally indicates an "or" relationship of the associated objects.

In the description of embodiments of the present disclosure, the term "plurality" refers to more than two (including two). Similarly, "the plurality of groups" refers to more than two groups (including two groups), and "the plurality of plates" refers to more than two plates (including two plates).

At present, from the perspective of the development of the market situation, the application of the battery is more and more extensive. The battery is not only applied in energy storage power systems, such as hydro, fire, wind, and solar power station, but also widely applied in electric transportations, such as electric bicycle, electric motorcycle, electric car, and applied in military equipment, aerospace, and other fields. With the continuous expansion of application fields of the power battery, the market demands also continuously expand.

With the broader application of the battery, the production process technology of the battery is also constantly developing. In the molding process of the battery, a battery electrode sheet can be unwound by a stacking machine. During an unwinding process of the electrode sheet, the electrode sheet may deviate, and the deviation of the electrode sheet will cause an effect on the electrode sheet after compounding. Therefore, it is necessary to correct a deviation of the electrode sheet during the unwinding process of the electrode sheet.

The prior deviation correction scheme corrects the deviation of the electrode sheet in an unwinding direction of the electrode sheet. For example, the deviation amount of the electrode sheet in the unwinding direction is detected, and then the electrode sheet is corrected in the unwinding direction by using a deviation correction mechanism.

It is found that the prior deviation correction scheme only considers the deviation of the electrode sheet in the unwinding direction during the unwinding process. However, in reality, the deviation of the electrode sheet includes multiple situations, for example, during the constant unwinding process of the electrode sheet, the electrode sheet will deviate left or right due to the friction, installation accuracy, and other influences; or for example, after the electrode sheet cutting is completed (also called after the electrode sheet is cut), the electrode sheet is subjected to an uneven external force during an advancing process, which will generate wrinkles and rotation, i.e., a rotational deviation.

As a result, the prior deviation correction scheme has a single deviation correction method, which cannot realize an effective deviation correction of the electrode sheet, and thus it cannot ensure the performance of the electrode sheet.

The electrode sheet deviates during the unwinding process or after cut. The deviation direction of the electrode sheet in these different deviation conditions is different. Therefore, if the electrode sheet is corrected in multiple deviation directions, it can ensure that the deviation of the electrode sheet is effectively corrected.

Based on this, in the technical solutions of embodiments of the present disclosure, considering that the electrode sheet may have deviations in multiple directions respectively, the electrode sheet is corrected in the first direction based on the first deviation amount, and the electrode sheet is corrected in the second direction based on the second deviation amount. In this way, the different deviation amounts of the electrode sheet in different directions can be corrected, which in turn realizes the effective deviation correction of the electrode sheet, so as to ensure the performance of the electrode sheet, such as the stability and uniformity of the electrode sheet.

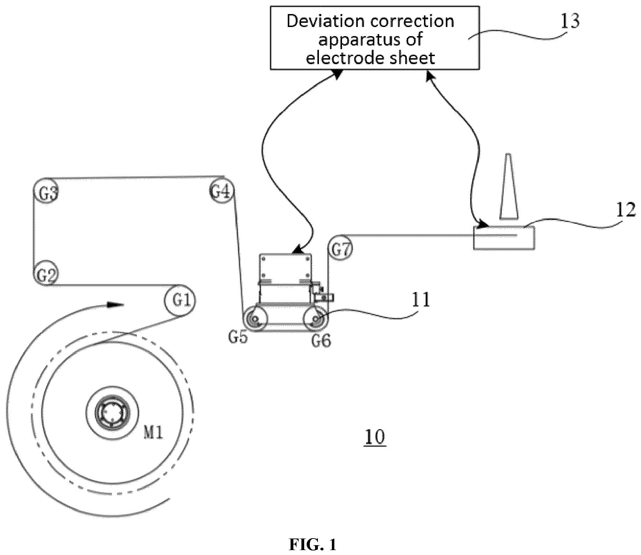

The technical solutions provided by the embodiments of the present disclosure can be applied to a deviation correction system of the electrode sheet. Referring to FIG. 1, FIG. 1 shows a schematic structure diagram of a deviation correction system 10 provided by one embodiment of the present disclosure. The deviation correction system 10 includes a first deviation correction mechanism 11, a second deviation correction mechanism 12, and a deviation correction apparatus 13 of the electrode sheet.

The first deviation mechanism 11 and the second deviation mechanism 12 are configured to realize the deviation corrections of the electrode sheet in different deviation correction directions.

In FIG. 1, G1-G7 represent transition rollers; the lines passing through G1-G7 in sequence represent unwound materials; and M1 represents an unwinding motor.

Since the deviation of the electrode sheet in different directions occurs in different unwinding processes, the first deviation correction mechanism 11 and the second deviation correction mechanism 12 are arranged at different positions.

The deviation correction apparatus 13 of the electrode sheet is communicatively connected to the first deviation correction mechanism 11 and the second deviation correction mechanism 12 respectively. The deviation correction apparatus 13 of the electrode sheet is configured to control the first deviation mechanism 11 and the second deviation mechanism 12 respectively according to relevant parameters detected, so as to realize a corresponding deviation correction of the electrode sheet.

In some embodiments, the deviation correction system 10 can further include a distance detection device and an image acquisition device, wherein the distance detection device is configured to detect a deviation distance, and the image acquisition device is configured to detect a deviation angle. In the embodiments of the present disclosure, the deviation distance and the deviation angle can be understood as deviation amounts in different deviation directions.

The deviation correction apparatus 13 of the electrode sheet is further communicatively connected to the distance detection device and the image acquisition device respectively, which in in turn acquires deviation information detected from the distance detection device and acquires the deviation information detected from the image acquisition device.

The deviation correction method of the electrode sheet provided by the embodiments of the present disclosure can be applied to the deviation correction of the positive electrode sheet and/or the negative electrode sheet, which is not limited herein.

Besides applied to the deviation correction of the electrode sheet in the stacking machine, in some other embodiments, it can also be applied to the deviation correction of the electrode sheet in other battery processing devices (such as a coiler), and is not limited herein.

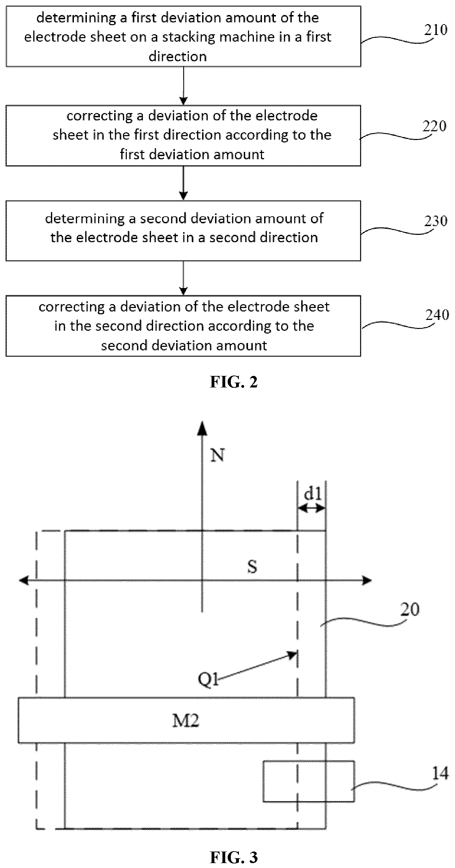

Based on the foregoing introduction of the inventive concept and application scenarios, referring to FIG. 2 next, FIG. 2 shows a schematic flow diagram of the deviation correction method of the electrode sheet provided by the embodiments of the present disclosure, wherein the deviation correction method includes:
step 210: determining the first deviation amount of the electrode sheet on the stacking machine in the first direction;
step 220: correcting a deviation of the electrode sheet in the first direction according to the first deviation amount;
step 230: determining the second deviation amount of the electrode sheet in the second direction; and
step 240: correcting a deviation of the electrode sheet in the second direction according to the second deviation amount.

In step 210, the electrode sheet on the stacking machine can refer to the unwound material represented by the lines that pass through the G1-G7 in sequence in FIG. 1, i.e., as the unwound material, the electrode sheet will pass through the unwinding motor and the transition roller on the stacking machine in sequence, and move forward continuously.

During the unwinding process of the electrode sheet, the electrode sheet may deviate in the first direction, wherein in step 210, a corresponding detection device detects the first deviation amount; and in step 220, the deviation correction device of the electrode sheet corrects a deviation of the electrode sheet in the first direction according to the first deviation amount.

In step 230, a corresponding detection device detects the second deviation amount; and in step 240, the deviation correction device of the electrode sheet corrects a deviation of the electrode sheet in the second direction according to the second deviation amount.

It can be understood that different deviation correction directions may correspond to different values of deviation correction amounts and different types of parameters, e.g., the distance and angle, which belong to two types of deviation amounts.

In the technical solutions of embodiments of the present disclosure, considering that the electrode sheet may deviate in multiple directions respectively, the electrode sheet is corrected in the first direction based on the first deviation amount, and the electrode sheet is corrected in the second direction based on the second deviation amount. In this way, the deviation amount of the electrode sheet in different directions can be corrected, which in turn realizes an effective deviation correction of the electrode sheet, so as to ensure the performance of the electrode sheet, such as the stability and uniformity of the electrode sheet.

As an optional embodiment, referring to FIG. 3, FIG. 3 shows a schematic diagram of the first direction and the first deviation amount. In FIG. 3, the unwinding direction of the stacking machine is N in the unwinding plane of the stacking machine, that is, the first direction is a vertical direction S of the unwinding direction N in the unwinding plane of the stacking machine. Correspondingly, the first deviation amount d1 is a distance of the electrode sheet 20 deviating from a first reference position Q1 in the vertical direction S.

In the embodiment, during the continuous unwinding process of the electrode sheet 20, the electrode sheet 20 may deviate left or right (i.e., deviate left or right in the vertical direction S) due to the friction, installation accuracy, and other influences, so that the electrode sheet 20 can be corrected in the vertical direction S.

In the technical solutions of the embodiments of the present disclosure, the electrode sheet 20 may deviate in the vertical direction S of the unwinding direction N due to the friction force, installation accuracy, and other influences. Therefore, the electrode sheet 20 in the vertical direction S is corrected by correcting a deviation of the electrode sheet 20 in the vertical direction S based on the first deviation amount d1.

Referring to FIG. 3, a distance detection device 14 is arranged in the unwinding direction N of the electrode sheet 20. Therefore, in some embodiments, the first deviation amount d1 is detected by the distance detection device 14.

The distance detection device 14 shown in FIG. 3 is arranged right, and in some embodiments, the distance detection device 14 can also be arranged left, and what is shown in FIG. 3 does not limit the embodiments of the present disclosure.

In some embodiments, the distance detection device 14 is a sensor or device that can realize a distance detection such as a photoelectric sensor, a face array camera, a line array camera, etc.

It can be understood that the distance detection device 14 detects the first deviation amount d1 based on the foregoing first reference position Q1 when detecting the first deviation amount d1. Taking FIG. 3 as an example, the distance detection device 14 realizes the detection of the first deviation amount d1 by detecting a distance between a right edge of the electrode sheet 20 and the reference position Q1 in real time.

In some embodiments, a plurality of distance detection devices can be arranged on different positions in the unwinding direction of the electrode sheet 20, and then the first deviation amount d1 is determined in combination with each detection result of the plurality of distance detection devices 14.

In some other embodiments, a detection period of the first deviation amount d1 can also be provided, and the first deviation amount d1 is periodically detected according to the detection period.

In the embodiments of the present disclosure, the effective and accurate detection of the first deviation amount d1 is realized by the distance detection device 14.

It can be understood that if the first deviation amount d1 is 0, it means that the electrode sheet 20 does not deviate in the first direction, so that the electrode sheet 20 does not need to be corrected in the first direction at this time.

As an optional embodiment, the step 220 includes: determining the first deviation direction of the electrode sheet 20 in the first direction; and controlling the electrode sheet 20 to move by the first deviation amount in the opposite direction of the first deviation direction in the first direction.

In some embodiments, the first deviation direction can be determined by combining an edge position of current electrode sheet 20 with an edge position of a reference electrode sheet 20. For example, if a coordinate of the edge position of current electrode sheet 20 is (1,0) and a coordinate of the edge position of the reference electrode sheet 20 is (2,0), the electrode sheet 20 deviates to the left compared with the coordinate of the edge position of the reference electrode sheet 20, and the first deviation direction is the left.

In some other embodiments, the first deviation direction can further be determined by combining a center position of current electrode sheet 20 with a center position of the reference, and the specific determination method is the same as the method of combining the edge position of the electrode sheet 20.

It should be noted that the first deviation direction herein is a direction relative to the vertical direction S, i.e., it is to determine whether the electrode sheet 20 deviates to the left or right in the vertical direction S.

Since the electrode sheet 20 deviates towards the first deviation direction in the first direction, in order to return the electrode sheet 20 to the reference position, it is needed to control the electrode sheet 20 to move by the first deviation amount d1 towards the opposite direction of the first deviation direction in the first direction.

In the technical solutions of the embodiments of the present disclosure, the deviation direction of the electrode sheet 20 in the first direction is determined first, and then the electrode sheet 20 is controlled to move by the first deviation amount towards the opposite direction of the deviation direction, so that the electrode sheet 20 does not deviate in the first direction, which realizes the deviation correction of the electrode sheet 20 in the first direction.

Referring to FIG. 3, as an optional embodiment, the step of controlling the electrode sheet 20 to move by the first deviation amount towards the opposite direction of the first deviation direction in the first direction includes: generating the control instruction of a first deviation correction motor M2 according to the first deviation direction and the first deviation amount; and sending the control instruction to the first deviation correction motor, so that the first deviation correction motor M2 controls the electrode sheet 20 to move by the first deviation amount d1 towards the opposite direction of the first deviation direction in the first direction.

In the embodiment, the first deviation correction motor M2 can be configured as an embodiment of the first deviation mechanism 11 described above. In some other embodiments, other deviation mechanisms can also be adopted to realize the deviation correction, which is not limited herein.

As for the deviation correction apparatus 13 of the electrode sheet, the control instruction of the first deviation correction motor M2 can be generated according to the first deviation direction and the first deviation amount; and the control instruction is sent to the first deviation correction motor M2, so that the first deviation correction motor M2 can control the electrode sheet 20 to move by the first deviation amount d1 towards the opposite direction of the first deviation direction in the first direction based on the control instruction.

In some embodiments, the control of the first deviation correction motor M2 can be realized by a PID (Proportional Integral Differential) algorithm; or other control algorithms, which is not limited herein.

In the embodiment, the first deviation correction motor M2 controls the electrode sheet 20 to move, which can be understood as a relative movement between the first deviation correction motor M2 and the electrode sheet 20 generates the friction force, and the friction force inhibits the electrode sheet 20 from moving left or right, which in turn changes the distance between the electrode sheet 20 and the first reference position Q1, thereby realizing the deviation correction.

In the technical solutions of the embodiments of the present disclosure, the deviation correction motor is configured as the deviation correction mechanism, and the control instruction of the deviation correction motor is generated, so that the deviation correction motor realizes the deviation correction according to the control instruction.

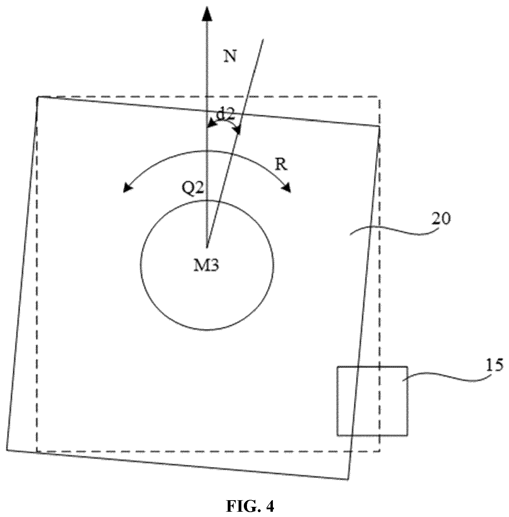

Referring to FIG. 4, FIG. 4 shows a schematic diagram of the second direction and the second deviation amount. The second direction is a rotational direction R corresponding to the unwinding direction N of the stacking machine in the unwinding plane of the stacking machine, and correspondingly, the second deviation amount d2 is an angle that the electrode sheet 20 deviates from the second reference position Q2 in the rotational direction.

As shown in FIG. 4, the rotational direction R is based on the unwinding direction N, and may rotate clockwise or counterclockwise. If the electrode sheet 20 does not deviate in the rotational direction R, the second deviation amount d2 is zero. If the electrode sheet 20 deviates in the rotational direction R, the second deviation amount d2 is a corresponding deviation angle, e.g., the electrode sheet 20 deviates 15 degrees relative to the unwinding direction N.

In the technical solutions of the embodiments of the present disclosure, if the electrode sheet 20 is subjected to the uneven external force during the advancing process, it will wrinkle and rotate, which leads to the deviation of the electrode sheet 20 in the rotational direction R. Therefore, the correction deviation of the electrode sheet 20 in the rotational direction R is realized by the second deviation amount d2 of the electrode sheet 20 in the rotational direction R, and in combination with the foregoing the correction deviation in the first direction, the correction deviation of the electrode sheet 20 in each possible deviation direction can be realized.

In some embodiments, the step of determining the second deviation amount d2 of the electrode sheet 20 in the second direction includes: acquiring images of the electrode sheet 20 at different moments by an image acquisition device 15; and determining the second deviation amount according to the images at the different moments.

In the embodiment, the image acquisition device 15 can acquire the images of the electrode sheet 20 at different moments, and the deviation amount of the electrode sheet 20 in the rotational direction R can be determined by comparing the images at different moments, e.g., by comparing the deviation amount between side edges on the same tab in images at different moments.

In some embodiments, the image acquisition device 15 is a CCD (Charge Coupled Device Camera) camera.

In the technical solutions of the embodiments of the present disclosure, the second deviation amount d2 is determined effectively and accurately based on the images at the different moments by acquiring the images of the electrode sheet 20 at different moments.

As an optional embodiment, the step 240 includes: determining the second deviation direction of the electrode sheet 20 in the second direction; and controlling the electrode sheet 20 to rotate by the second deviation amount d2 towards the reverse direction of the second deviation direction in the second direction.

In some embodiments, taking the second direction as an example of the rotational direction R, the electrode sheet 20 may deviate in the second direction towards a clockwise direction or a counterclockwise direction. Therefore, it is required to determine a specific deviation direction of the electrode sheet 20 in the second direction.

As an optional embodiment, the process of determining the second deviation direction includes: determining whether the second deviation amount deviates toward the clockwise direction or the counterclockwise direction relative to the second reference position Q2, wherein if it deviates toward the clockwise direction, the second deviation direction is clockwise; and if it deviates toward the counterclockwise direction, the second deviation direction is counterclockwise.

Based on the second deviation direction, the deviation correction apparatus 13 of the electrode sheet controls the electrode sheet 20 to rotate by the second deviation amount d2 towards the reverse direction of the second deviation direction in the second direction to realize the deviation correction of the electrode sheet 20.

In the technical solutions of the embodiments of the present disclosure, the deviation direction of the electrode sheet 20 in the second direction is determined first, and then the electrode sheet 20 is controlled to rotate by the second deviation amount d2 towards the reverse direction of the deviation direction, so that the electrode sheet 20 does not deviate in the second direction, which realizes the deviation correction of the electrode sheet 20 in the second direction.

As an optional embodiment, the step of controlling the electrode sheet 20 to rotate by the second deviation amount d2 towards the opposite direction of the second deviation direction in the second direction includes: generating the control instruction of the second deviation correction motor according to the second deviation direction and the second deviation amount d2; and sending the control instruction to the second deviation correction motor, so that the electrode sheet 20 rotates by the second deviation amount d2 towards the reverse direction of the second deviation direction in the second direction.

In the embodiment, the second deviation correction motor can be adopted as an embodiment of the second deviation mechanism 12 described above, and the second deviation mechanism 12 can adopt other embodiments, which is not limited herein.

In some embodiments, the control of the second deviation correction motor can be realized by the PID algorithm or other control algorithms, which is not limited herein.

In some embodiments, since the second deviation correction motor needs to rotate the electrode sheet 20 reversely in the second direction, the second deviation correction motor can be adopted as a rotation motor, i.e., the motion of the second deviation correction motor is a rotary motion, so as to drive the electrode sheet 20 to rotate.

In the technical solutions of the embodiments of the present disclosure, the deviation correction motor is configured as the deviation correction mechanism, and the control instruction of the deviation correction motor is generated, so that the deviation correction motor realizes the deviation correction according to the control instruction.

In some embodiments, the step 210 includes: determining the first deviation amount d1 of the electrode sheet 20 in the first direction during the unwinding process of the electrode sheet 20.

In the embodiment, the first direction can be the foregoing vertical direction S.

In the technical solutions of the embodiments of the present disclosure, during the unwinding process of the electrode sheet 20, the friction, the installation accuracy, and other influences may cause the left or right deviation of the electrode sheet 20, at which time the first deviation amount can be detected to realize a vertical deviation correction in the first direction.

In some embodiments, the step 230 includes: determining the second deviation amount d2 of the electrode sheet 20 in the second direction during the advancing process of the electrode sheet 20 after the electrode sheet 20 is cut off and before the electrode sheet 20 is fed with the material.

In the embodiment, the second direction can be the foregoing rotational direction R.

In the technical solutions of the embodiments of the present disclosure, the electrode sheet 20 may rotate due to uneven friction and other reasons after the electrode sheet 20 is cut off, at which time the rotational deviation correction in the second direction can be realized by the second deviation amount d2.

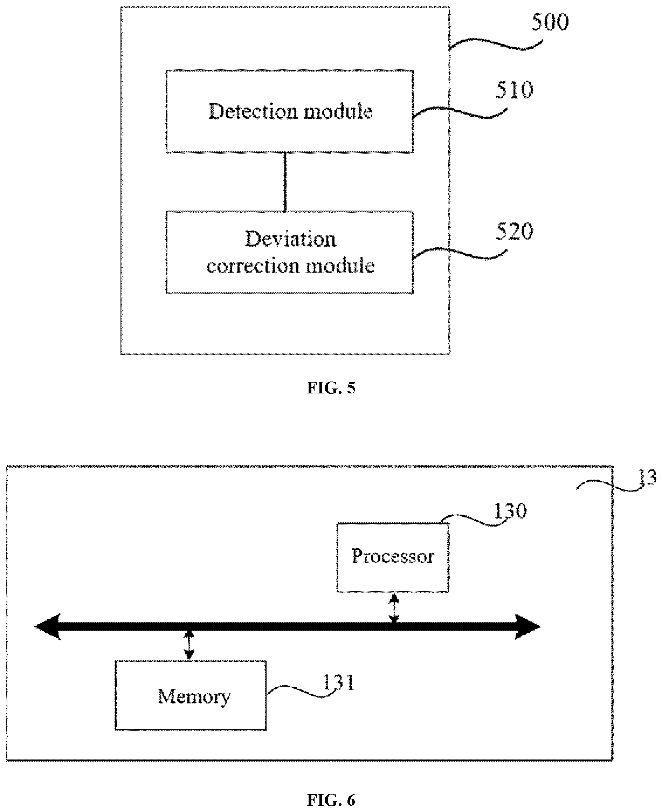

Referring to FIG. 5, FIG. 5 shows a schematic structure diagram of the deviation correction device 500 of the electrode sheet provided by the embodiments of the present disclosure, wherein the deviation correction device 500 of the electrode sheet includes a detection module 510 and a deviation correction module 520.

The detection module 510 is configured to determine the first deviation amount of the electrode sheet 20 on the stacking machine in the first direction.

The deviation correction module 520 is configured to correct a deviation of the electrode sheet 20 in the first direction according to the first deviation amount, wherein the detection module 510 is further configured to determine the second deviation amount of the electrode sheet in the second direction; and the deviation correction module 520 is further configured to correct a deviation of the electrode sheet 20 in the second direction according to the second deviation amount.

In the embodiments of the present disclosure, the detection module 510 is specifically configured to detect the first deviation amount by the distance detection device.

In the embodiments of the present disclosure, the deviation correction module 520 is specifically configured to determine the first deviation direction of the electrode sheet 20 in the first direction; and control the electrode sheet 20 to move by the first deviation amount towards the opposite direction of the first deviation direction in the first direction.

In the embodiments of the present disclosure, the deviation correction module 520 is specifically configured to generate the control instruction of the first deviation correction motor according to the first deviation direction and the first deviation amount; and send the control instruction to the first deviation correction motor, so that the first deviation correction motor controls the electrode sheet 20 to move by the first deviation amount towards the opposite direction of the first deviation direction in the first direction.

In the embodiments of the present disclosure, the detection module 510 is specifically configured to acquire the images of the electrode sheet 20 at the different moments by the image acquisition device; and determine the second deviation amount according to the images at the different moments.

In the embodiments of the present disclosure, the deviation correction module 520 is specifically configured to determine the second deviation direction of the electrode sheet 20 in the second direction; and control the electrode sheet 20 to rotate by the second deviation amount towards the reverse direction of the second deviation direction in the second direction.

In the embodiments of the present disclosure, the deviation correction module 520 is specifically configured to generate the control instruction of the second deviation correction motor according to the second deviation direction and the second deviation amount; and send the control instruction to the second deviation correction motor, so that the electrode sheet 20 moves the second deviation amount towards the reverse direction of the second deviation direction in the second direction.

In the embodiments of the present disclosure, the detection module 510 is specifically configured to determine the first deviation amount of the electrode sheet 20 in the first direction during the unwinding process of the electrode sheet 20.

In the embodiments of the present disclosure, the detection module 510 is specifically configured to determine the second deviation amount of the electrode sheet 20 in the second direction during the advancing process after the electrode sheet 20 is cut off and before the electrode sheet 20 is fed with the material.

The deviation correcting device 500 of the electrode sheet corresponds to the foregoing deviation correction method of the electrode sheet, and each functional module corresponds to each step of the method. Therefore, the embodiments of each functional module refer to the foregoing embodiments, and will not be repeated herein.

Referring to FIG. 6, FIG. 6 shows a schematic structure diagram of the deviation correction apparatus 13 of the electrode sheet provided by the embodiments of the present disclosure, wherein the deviation correction apparatus 13 of the electrode sheet includes a processor 130 and a memory 131 communicatively connected to the processor 130.

The memory 131 stores instructions that can be executed by the processor 130, and the instructions are executed by the processor 130, so that the processor 130 can execute the deviation correction method of the electrode sheet described in the foregoing embodiments.

The processor 130 can be communicatively connected to the memory 131 by a communication bus.

The embodiments of the present disclosure further provide a computer-readable storage medium, wherein the computer-readable storage medium stores computer programs thereon, and the deviation correction method of the electrode sheet described in the foregoing embodiments is executed when the computer programs are run by a computer.

In the embodiments provided by the present disclosure, it should be understood that the disclosed devices and methods can be realized in other methods. The foregoing embodiments of devices are merely illustrative, for example, the division of the units is only a logical and functional division, and can be divided in other methods when actually realized, or, for example, multiple units or components can be combined or integrated into another system, or some features can be ignored, or not executed. For another point, the mutual coupling, direct coupling, or communication connection shown or discussed can be an indirect coupling or communication connection by some communication interfaces, devices, or units, which can be electrical, mechanical, or in other forms.

Additionally, the units illustrated as separated components may or may not be physically separated, and the components shown as units may or may not be physical units, i.e., they may be located on one position, or they may be distributed to a plurality of network units. Partial or all of these units can be selected to realize the purpose of the embodiment scheme according to actual needs.

Furthermore, each functional module in each embodiment of the present disclosure can be integrated together to form an independent part, or each module can exist separately, or two or more modules can be integrated to form a separate part.

The above are merely embodiments of the present disclosure, and are not intended to limit the scope of protection of the present disclosure. For those skilled in the art, the present disclosure can be made of various changes and variations. Any modifications, equivalent substitutions, improvements, etc., made within the spirit and principles of the present disclosure shall be included in the scope of protection of the present disclosure.

## Claims

1. A deviation correction method of an electrode sheet, comprising:
determining a first deviation amount of the electrode sheet on a stacking machine in a first direction;
correcting a deviation of the electrode sheet in the first direction according to the first deviation amount;
determining a second deviation amount of the electrode sheet in a second direction; and
correcting a deviation of the electrode sheet in the second direction according to the second deviation amount.

2. The deviation correction method of the electrode sheet according to claim 1, wherein the first direction is a vertical direction of an unwinding direction of the stacking machine in an unwinding plane of the stacking machine, and the first deviation amount is a distance of the electrode sheet deviating from a first reference position in the vertical direction.

3. The deviation correction method of the electrode sheet according to claim 1 or 2, wherein the step of determining a first deviation amount of the electrode sheet on a stacking machine in a first direction comprises:
detecting the first deviation amount by a distance detection device.

4. The deviation correction method of the electrode sheet according to claim 1 or 2, wherein the step of correcting a deviation of the electrode sheet in the first direction according to the first deviation amount comprises:
determining a first deviation direction of the electrode sheet in the first direction, and
controlling the electrode sheet to move by the first deviation amount towards an opposite direction of the first deviation direction in the first direction.

5. The deviation correction method of the electrode sheet according to claim 4, wherein the step of controlling the electrode sheet to move by the first deviation amount towards an opposite direction of the first deviation direction in the first direction comprises:
generating a control instruction of a first deviation correction motor according to the first deviation direction and the first deviation amount; and
sending the control instruction to the first deviation correction motor, so that the first deviation correction motor controls the electrode sheet to move by the first deviation amount towards the opposite direction of the first deviation direction in the first direction.

6. The deviation correction method of the electrode sheet according to claim 1, wherein the second direction is a rotational direction corresponding to an unwinding direction of the stacking machine in an unwinding plane of the stacking machine, and the second deviation amount is an angle of the electrode sheet deviating from a second reference position in the rotational direction.

7. The deviation correction method of the electrode sheet according to claim 1 or 6, wherein the step of determining a second deviation amount of the electrode sheet in a second direction comprises:
acquiring images of the electrode sheet at different moments by an image acquisition device; and
determining the second deviation amount according to the images at the different moments.

8. The deviation correction method of the electrode sheet according to claim 1 or 6, wherein the step of correcting a deviation of the electrode sheet in the second direction according to the second deviation amount comprises:
determining a second deviation direction of the electrode sheet in the second direction, and
controlling the electrode sheet to rotate by the second deviation amount towards a reverse direction of the second deviation direction in the second direction.

9. The deviation correction method of the electrode sheet according to claim 8, wherein the step of controlling the electrode sheet to rotate by the second deviation amount towards a reverse direction of the second deviation direction in the second direction comprises:
generating a control instruction of a second deviation correction motor according to the second deviation direction and the second deviation amount; and
sending the control instruction to the second deviation correction motor, so that the electrode sheet rotates by the second deviation amount towards the reverse direction of the second deviation direction in the second direction.

10. The deviation correction method of the electrode sheet according to claim 1, wherein the step of determining a first deviation amount of the electrode sheet in a first direction comprises:
determining the first deviation amount of the electrode sheet in the first direction during an unwinding process of the electrode sheet.

11. The deviation correction method of the electrode sheet according to claim 1, wherein the step of determining a second deviation amount of the electrode sheet on the stacking machine in a second direction comprises:
determining the second deviation amount of the electrode sheet in the second direction during an advancing process after the electrode sheet is cut off and before the electrode sheet is fed with materials.

12. A deviation correction device of an electrode sheet, comprising:
a detection module, configured to determine a first deviation amount of the electrode sheet on a stacking machine in a first direction; and
a deviation correction module, configured to correct a deviation of the electrode sheet in the first direction according to the first deviation amount, wherein
the detection module is further configured to determine a second deviation amount of the electrode sheet in a second direction; and
the deviation correction module is further configured to correct a deviation of the electrode sheet in the second direction according to the second deviation amount.

13. A deviation correction apparatus of an electrode sheet, comprising:
a processor, and a memory communicatively connected to the processor, wherein
the memory stores instructions that can be executed by the processor, and the instructions are executed by the processor, so that the processor can execute the deviation correction method of the electrode sheet according to any one of claims 1 to 11.

14. A computer-readable storage medium, wherein the computer-readable storage medium stores computer programs, and the deviation correction method of the electrode sheet according to any one of claims 1 to 11 is executed when the computer programs are run by a computer.
